# EUROPÄISCHE PATENTANMELDUNG

(11) **EP 0 600 215 A2**
(43) Veröffentlichungstag der Anmeldung: **08.06.1994**
(21) Anmeldenummer: 93117228.2
(22) Anmeldetag: 25.10.1993
(51) Int. Cl.: G01N 27/28

(54) **Elektrochemischer Sensor**

(30) Priorität: 28.11.1992 DE 4240068
(71) Anmelder: PROMINENT DOSIERTECHNIK GmbH, D-69007 Heidelberg (DE)
(72) Erfinder: Pinkowski, Alexander, Dr., D-64757 Rothenberg (DE)
(74) Vertreter: Knoblauch, Andreas, Dr.-Ing.

(57) **Zusammenfassung**

Es wird ein elektrochemischer Sensor (1) mit einer Elektrodenanordnung (3) und einer Zentraleinheit (2) angegeben, die mit der Elektrodenanordnung elektrisch verbunden ist und von der Elektrodenanordnung gelieferte Signale auswertet
Mit einem derartigen Sensor soll eine elektrochemische Messung vereinfacht werden können.

Dazu weist die Zentraleinheit (2) erste Mittel (6) zum Durchführen einer potentiometrischen Messung und zweite Mittel (7) zum Durchführen einer amperometrischen Messung und eine Schalteinrichtung (9) auf, die die Elektrodenanordnung (3) zwischen den ersten und den zweiten Mitteln (6, 7) umschaltet.

## Beschreibung

Die Erfindung betrifft einen elektrochemischen Sensor mit einer Elektrodenanordnung und einer Zentraleinheit, die mit der Elektrodenanordnung elektrisch verbunden ist und von der Elektrodenanordnung gelieferte Signale auswertet.

Bei den meisten elektrochemischen Sensoren wird entweder ein potentiometrisches oder ein amperometrisches Meßprinzip angewendet. Beim potentiometrischen Meßprinzip wird zwischen einer sogenannten Arbeitselektrode und einer sogenannten Referenzelektrode ein Potential gemessen, das der Konzentration oder genauer der Aktivität der zu detekierenden Spezies in einem Meßmedium proportional ist. Ein bekanntes Beispiel für potentionmetrische Sensoren sind pH-Elektroden und die sogenannten Redoxelektroden. Bei den pH-Elektroden in Form von sogenannten Einstabmeßketten dient beispielsweise eine Glasmembran als Arbeitselektrode und eine Ag/AgCl-Elektrode im Kontakt mit einem inneren Referenzelektrolyten konstanter Chloridionenkonzentration als Referenzelektrode. Falls nicht anders angegeben, beziehen sich die hier beschriebenen Beispiele auf ein derartiges Ag/AgCl-Bezugssystem.

Amperometrische Sensoren können als 2- oder 3-Elektroden-Systeme ausgeführt sein. Ein 2-Elektroden-System besteht aus einer Arbeits- und einer Gegenelektrode. 3-Elektroden-Systeme enthalten zusätzlich noch eine Referenzelektrode. Bei den 2-Elektroden-Systemen kann gegebenenfalls die Gegenelektrode die Funktion der Referenzelektrode mitübernehmen.

Im Gegensatz zu potentiometrischen Sensoren wird bei amperometrischen Sensoren mit Hilfe geeigneter elektronischer Schaltungen zwischen der Arbeits- und der Gegen- bzw. Referenzelektrode ein konstantes oder veränderliches Potential erzeugt und dann der zwischen Arbeits- und Gegen- bzw. Referenzelektrode fließende Strom gemessen. Dieser Strom ist dabei der Konzentration der zu detektierenden Spezies im Meßmedium proportional.

In vielen Fällen kann eine Spezies sowohl potentiometrisch als auch amperometrisch bestimmt werden. Welches Meßverfahren angewendet wird, hängt beispielsweise davon ab, mit welchen Mitteln man den gewünschten Meßbereich oder eine erforderliche Unempfindlichkeit gegenüber störenden Fremdspezies oder anderen Einflüssen besser erreichen kann. Die Auswahl des Meßverfahrens beruht also im wesentlichen auf der Kenntnis der zu detektierenden Spezies und der damit gemachten Erfahrungen. Stellt sich beispielsweise bei neu zu detektierenden Spezies oder bei veränderten Umgebungsbedingungen heraus, daß ein Wechsel des Meßverfahrens notwendig ist, sind Umbauarbeiten und eine Neueinrichtung des elektrochemischen Sensors notwendig, was insbesondere in einer Experimentierphase lästig ist.

DE 40 11 428 A1 beschreibt eine Meßvorrichtung und Verfahren zur automatischen Bestimmung der Konzentration von Biokatalysatorsubstraten. Hierbei ist ein Biosensorsystem mit mindestens drei elektrochemischen Sensoren vorgesehen. Ein Sensor ist in jedem Falle ein mit mindestens einem Biokatalysator beschichteter, elektrochemischer Sensor. Der zweite Sensor ist ebenfalls ein mit mindestens einem Biokatalysator beschichteter, elektrochemischer Sensor, er kann aber auch ein unbeschichteter, elektrochemischer Sensor sein. Der Zweite Sensor muß aber von der gleichen Art wie der erste Sensor sein. Der dritte elektrochemische Sensor dient als Referenzsensor gegenüber den beiden anderen Sensoren. Er muß nicht in jedem Fall sichtbar im Biosystem enthalten sein. Vielmehr kann er auch integraler Bestandteil sein. Bei einer potentiometrischen Messung wird als erster Sensor eine mit Penicillinase beschichtete pH-Elektrode und als zweiter Sensor eine unbeschichtete pH-Elektrode verwendet. Bei einer amperometrischen Messung werden als Meßsensoren Sauerstoff oder Reaktionsprodukte messende Sensoren mit Referenzsensor verwendet. Hierbei ist der erste Meßsensor mit einer Enzymmembran beschichtet, die Saccharose (Invertase), Mutarotase und Glukoseoxidase enthält. Der zweite Sensor ist hingegen nur mit einer Glukoseoxidase enthaltenden Membran beschichtet.

DE 39 30 671 A1 zeigt eine Metall-Metalloxidelektrode zur Bestimmung von Chlor, die sowohl bei der amperometrischen als auch bei der potentiometrische Bestimmung von Chlor in wässrigen Elektrolyten geeignet ist.

Der Erfindung liegt daher die Aufgabe zugrunde, elektrochemische Messungen zu vereinfachen.

Diese Aufgabe wird bei einem elektrochemischen Sensor der eingangs genannten Art dadurch gelöst, daß die Zentraleinheit erste Mittel zum Durchführen einer potentiometrischen Messung und zweite Mittel zum Durchführen einer amperometrischen Messung und eine Schalteinrichtung aufweist, die die Elektrodenanordnung zwischen den ersten und den zweiten Mitteln umschaltet.

Mit einem derartigen Sensor lassen sich nun sowohl potentiometrische als auch amperometrische Messungen durchführen, ohne daß ein größerer Umbau erforderlich ist. Zum Wechseln von der einen auf die andere Betriebsweise wird einfach die Schalteinrichtung betätigt. Weitere Umbauten oder Neueinrichtungen des Sensors sind nicht erforderlich.

Bevorzugterweise weist die Elektrodenanordnung eine für die potentiometrische und für die amperometrische Messung gemeinsame Referenzelektrode auf. Überraschenderweise wurde gefunden, daß man ohne Schädigung der einzelnen Bestandteile von potentiometrischen Elektrodenanordnungen, insbesondere der Referenzelektrode, und ohne Beeinträchtigung ihrer potentiometrischen Funktionsweise diese an sich nur für potentiometrische Messungen geeignete Elektrodenanordnung oder Teile derselben auch als amperometrische Elektrodenanordnung betreiben kann, obwohl im letzten Fall Ströme fließen, die eine Veränderung der potentiometrischen Elektrodenanordnung an sich befürchten ließen.

Vorteilhafterweise weist die Elektrodenanordnung eine Gegenelektrode auf, die zumindest nach dem Umschalten der Schalteinrichtung von den ersten auf die zweite Mittel mit den Zweiten Mitteln verbunden ist. Eine derartige Gegenelektrode ist für die amperometrische Messung notwendig. Sie kann bei der potentiometrischen Betriebsweise vollkommen abgeschaltet werden. Sie kann aber auch permanent mit den zweiten Mitteln zur Durchführung der amperometrischen Messung verbunden bleiben, wenn durch schaltungstechnische Maßnahmen dafür gesorgt ist, daß über die Gegenelektrode kein störender Strom abfließen kann.

Bevorzugterweise ist hierbei die Gegenelektrode als Referenzelektrode ausgebildet. In diesem Fall wird beim Umschalten zwischen der potentiometrischen und der amperometrischen Messung, also zwischen den ersten und den zweiten Mitteln, lediglich die Betriebsweise der Referenzelektrode geändert. Weitere Maßnahmen sind nicht erforderlich.

Alternativ dazu kann die Referenzelektrode in einem ersten Bauteil gebildet sein und die Gegenelektrode kann in einem davon räumlich getrennten zweiten Bauteil ausgebildet sein, wobei beide Bauteile in dasselbe Fluid eingetaucht sind. Bei der amperometrischen Messung wird dann eine 3-Elektroden-Anordnung verwendet. Die dritte Elektrode, d.h. die Gegenelektrode, stört hingegen bei der potentiometrischen Messung überhaupt nicht.

Mit Vorteil weist das erste Bauteil eine erste Arbeitselektrode und das zweite Bauteil eine zweite Arbeitselektrode auf, wobei vor dem Umschalten der Schalteinrichtung von den ersten auf die zweiten Mitteln die erste Arbeitselektrode mit den ersten Mitteln und nach dem Umschalten die zweite Arbeitselektrode mit den zweiten Mitteln verbunden sind. In diesem Fall läßt sich eine noch bessere Anpassung des Sensors an die unterschiedlichen Arbeitsweisen, d.h. den potentiometrischen und den amperometrischen Betrieb, erreichen. In diesem Fall ist tatsächlich nur noch die Referenzelektrode für beide Betriebsweisen die gleiche. Die Arbeitselektrode kann für den potentiometrischen Betrieb unter dem Gesichtspunkt der optimalen Auslegung anders gewählt werden als für den amperometrischen Betrieb.

Hierbei ist besonders bevorzugt, daß die Schalteinrichtung beim Umschalten von den ersten auf die zweiten Mittel die Verbindung von der ersten Arbeitselektrode zu den ersten Mitteln unterbricht und eine Verbindung von der zweiten Arbeitselektrode zu den zweiten Mitteln herstellt und umgekehrt. Die zweite Arbeitselektrode ist dann bei der potentiometrischen Messung vollkommen abgeschaltet, während die erste Arbeitselektrode bei der potentiometrischen Messung vollkommen abgeschaltet ist. Beide Arbeitselektroden können sich dann gegenseitig in keiner Weise beeinflussen.

Mit Vorteil weisen die ersten und die zweiten Mittel gemeinsame mechanische und/oder elektrische Bauelemente auf. Dies kann beispielsweise ein gemeinsames Gehäuse und gemeinsame Zuleitungen umfassen. Der größte Vorteil ergibt sich jedoch bei der gemeinsamen Verwendung von elektrischen Komponenten, wie Verstärker- oder Steuerschaltungen oder Teilen davon, so daß im Endeffekt ein derartiger Sensor auch preislich günstiger ist als die Verwendung zweier getrennter Sensoren.

Mit Vorteil weist die Zentraleinheit eine Steuereinrichtung auf, die die Schalteinrichtung nach einem vorbestimmten Muster oder in Abhängigkeit von einem externen Signal betätigt. Hiermit lassen sich verschiedene Meßphilosophien auf einfache Art und Weise realisieren.

Es können beispielsweise amperometrische und potentiometrische Messungen im Wechsel durchgeführt werden. Auch läßt sich der Wechsel von amperometrischen zu potentiometrischen Messungen und umgekehrt in Abhängigkeit von äußeren Bedingungen, die der Steuereinrichtung über das externe Signal mitgeteilt werden, steuern. Das Muster kann beispielsweise in einem mechanischen oder elektronischen Speicher abgelegt sein.

Hierbei ist es besonders vorteilhaft, daß ein Hilfssensor vorgesehen ist, dessen Ausgangssignal das externe Signal bildet. Der Hilfssensor kann beispielsweise auf Temperaturwerte, pH-Werte oder ähnliches reagieren. Die Steuereinrichtung kann dann in Abhängigkeit von dieser Information die für die Messung vorteilhafteste Betriebsweise auswählen.

Mit Vorteil ist zusätzlich zur Elektrodenanordnung eine pH-Elektrode mit einem Referenzsystem vorgesehen, wobei das Referenzsystem gleichzeitig oder über die Schalteinrichtung alternierend mit den zweiten Mitteln verbunden ist und als Referenzelektrode der Elektrodenanordnung bei einer amperometrischen 3-Elektroden-Schaltung oder als Gegenelektrode der Elektrodenanordnung bei einer amperometrischen 2-Elektroden-Schaltung dient. In diesem Fall läßt sich das amperometrische Meßsignal pH-abhängig korrigieren, wobei nur ein geringer zusätzlicher Aufwand zu treiben ist. Das Referenzsystem kann hierbei als Referenzelektrode für die amperometrische Messung verwendet werden.

Hierbei ist es besonders vorteilhaft, wenn die pH-Elektrode einen großen Silberchlorid-Vorrat aufweist. In diesem Fall läßt sich eine relativ lange Lebensdauer erzielen.

Die Erfindung betrifft auch ein Verfahren zum Betreiben des Sensors, wobei periodisch von der potentiometrischen Messung auf die amperometrische Messung und zurück geschaltet wird. In diesem Fall lassen sich beide Meßverfahren alternierend verwenden, so daß nicht nur eine gegenseitige Plausibilitätskontrolle durchgeführt werden kann, sondern auch die Vorteile beider Verfahren nahezu gleichzeitig und in einem Sensor genutzt werden können.

Hierbei ist es von Vorteil, daß die potentiometrische und die amperometrische Messung in Zeitabschnitten unterschiedlicher Länge durchgeführt werden. Man kann sich, beispielsweise wenn man die Eigenschaften des zu messenden Fluids ermittelt hat, auf das jeweils günstigere Meßverfahren beschränken, wobei das andere Meßverfahren nur noch zur Plausibilitätskontrolle verwendet wird.

Hierbei ist es von besonderem Vorteil, daß die amperometrische Messung zur Feinkorrektur der potentiometrischen Messung verwendet wird. Man erhält hiermit ohne größeren Aufwand relativ genaue Meßergebnisse.

Die Erfindung wird im folgenden anhand von bevorzugten Ausführungsbeispielen in Verbindung mit der Zeichnung beschrieben. Hierin zeigen:
- Fig. 1: einen elektrochemischen Sensor und
- Fig. 2 bis 4: Ausgestaltungen von Elektrodenanordnungen.

Ein elektrochemischer Sensor 1 weist eine Zentraleinheit 2 und eine Elektrodenanordnung 3 auf, die in ein Gefäß 4 mit einem zu messenden Fluid 5 eingetaucht ist.

Die Zentraleinheit weist erste Mittel 6 zur Durchführung einer potentiometrischen Messung und zweite Mittel 7 zur Durchführung einer amperometrischen Messung auf. Durch ein gestrichelt gezeichnetes Kästchen 8, das beide Mittel 6, 7 zumindest teilweise umfaßt, ist angedeutet, daß die ersten Mittel 6 und die zweiten Mittel 7 eine Vielzahl von elektrischen und mechanischen Bauteilen gemeinsam haben.

Zwischen den ersten und zweiten Mitteln 6, 7 und der Elektrodenanordnung 3 ist eine Schalteinrichtung 9 angeordnet, die über eine Steuereinrichtung 10 betätigbar ist. Die Steuereinrichtung 10 ihrerseits bekommt Informationen, aufgrund derer sie die Schalteinrichtung 9 betätigt, über einen Eingang 11, einen Programmspeicher 12 und/oder einen externen Hilfssensor 13, der beispielsweise die Temperatur des Fluids 5 feststellt.

Die Schalteinrichtung 9 weist einen ersten Schalter 14 auf, der als Wechselschalter ausgebildet ist, d.h. entweder eine erste Schaltstrecke 15 oder eine zweite Schaltstrecke 16 schließt, wobei beide Schaltstrecken verschiedene Anfangs- und Endpunkte haben. Ferner ist in der Schalteinrichtung 9 ein Einschalter 17 und ein Umschalter 18 vorgesehen. Der Einschalter 17 schließt eine Strecke zwischen zwei Punkten oder öffnet sie. Der Umschalter 18 verbindet einen Schaltpunkt mit einem von zwei anderen Schaltpunkten.

Der Wechselschalter 14 und der Umschalter 18 sind mit ihren beiden Ausgängen jeweils mit den ersten und zweiten Mitteln 6, 7 verbunden. Der Einschalter 17 ist nur mit den zweiten Mitteln 7 zur Durchführung einer amperometrischen Messung verbunden.

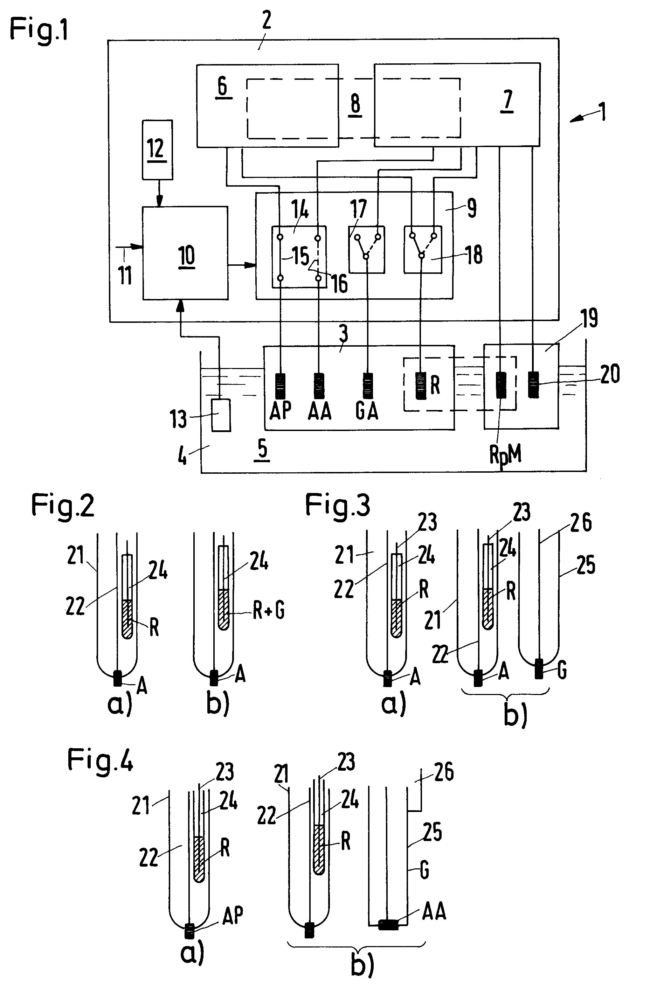

Die Elektrodenanordnung 3 weist mehrere Elektroden auf, die mit großen Buchstaben bezeichnet sind, wobei der erste Buchstabe für die Funktion steht, nämlich R, G und A in dieser Reihenfolge für Referenzelektrode, Gegenelektrode und Arbeitselektrode, während der zweite Buchstabe für die Betriebsweise steht, nämlich A für amperometrische Messung und P für potentiometrische Messung. Wenn der zweite Buchstabe fehlt, ist die jeweilige Elektrode für beide Einsatzzwecke geeignet. Die gleiche Bezeichnung wird für die in den Fig. 2 bis 4 dargestellten und später näher erläuterten Elektrodenanordnungen verwendet.

Der Wechselschalter 14 verbindet also entweder die Arbeitselektrode AP für potentiometrische Messungen mit den ersten Mitteln 6 oder die Arbeitselektrode AA für amperometrische Messungen mit den zweiten Mitteln 7. Der Einschalter 17 stellt eine Verbindung zwischen der Gegenelektrode GA für amperometrische Messungen mit den zweiten Mitteln 7 her, während der Umschalter 18 die Referenzelektrode R entweder mit den ersten Mitteln 6 oder mit den zweiten Mitteln 7 verbindet.

Ferner ist eine pH-Elektrode 19 in das zu messende Fluid eingetaucht. Die pH-Elektrode 19 weist ein Referenzsystem RpH auf, das, wie dies mit einer gestrichelten Linie angedeutet ist, auch als Referenzelektrode R sowohl für die amperometrische als auch für die potentiometrische Messung verwendet werden kann. In diesem Fall ist eine Verbindung zwischen dem Referenzsystem RpH und den zweiten Mitteln 7, die in Fig. 1 eingezeichnet ist, natürlich unterbrochen. Ferner ist eine weitere Elektrode 20 vorgesehen, die mit den zweiten Mitteln 7 verbunden ist. Mit Hilfe der pH-Elektrode 19 läßt sich der pH-Wert des Fluids 5 feststellen, was zu einer Feinkorrektur des durch die zweiten Mittel 7 auf amperometrische Weise ermittelten Meßsignals verwendet werden kann.

In Fig. 2 ist eine erste Elektrodenanordnung gezeigt, bei der in einem Gehäuse 21 eine Arbeitselektrode A, beispielsweise aus Platin eingesetzt ist. Diese ist mit einem Ableitungsdraht 22 verbunden. Ferner ist eine Ag/AgCl-Referenzelektrode R vorgesehen, die mit einem Ag-Ableitungsdraht 23 verbunden ist. Der Ableitungsdraht 23 ist mit dem Umschalter 18 verbunden. Der Ableitungsdraht 22 ist mit dem Wechselschalter 14 verbunden.

Fig. 2b zeigt die gleiche Elektrodenanordnung, diesmal jedoch in ihrer Funktion für die amperometrische Messung. In diesem Fall dient die Ag/AgCl-Referenzelektrode als Gegenelektrode. Es handelt sich also hier um ein 2-Elektroden-System mit einer Arbeitselektrode A und einer Gegenelektrode R + G. Auf die in Fig. 1 getrennt dargestellte Gegenelektrode GA kann hier verzichtet werden.

Fig. 3 zeigt eine andere Elektrodenanordnung, die im amperometrischen Fall als 3-Elektroden-Anordnung betrieben wird. Die in Fig. 3a dargestellte Elektrodenanordnung für die potentiometrische Betriebsweise ist gegenüber der nach Fig. 2a unverändert. Auch hier gibt es wieder eine Arbeitselektrode A, beispielsweise aus Platin, und eine Referenzelektrode R, die beispielsweise durch ein Silber/Silberchlorid-Element 24 gebildet wird, wie sie durch ein PHEX-Elektrodenelement realisiert sein kann.

In Fig. 3b ist diese Anordnung unverändert übernommen. Hinzu kommt allerdings in einem Gehäuse 25 eine Gegenelektrode G, die über einen Ableitungsdraht 26 zum Einschalter 17 geführt ist. Das Gehäuse 25 kann durch die Wand des Gefäßes 4 gebildet sein, das das Fluid 5 aufnimmt. Die Gegenelektrode G kann auch aus Platin gebildet sein. Sie kann jedoch auch aus einem anderen geeigneten Material, z.B. Edelstahl 1.4571, gebildet sein. Bei der Elektrodenanordnung nach Fig. 3 ist der Schalter 14 nicht als Wechselschalter, sondern als Umschalter ausgebildet, d.h. er verbindet den Ableitungsdraht 23 entweder mit den ersten oder mit den zweiten Mitteln 6, 7.

Fig. 4 zeigt eine dritte Elektrodenanordnung, bei der die in Fig. 4a dargestellte Elektrodenanordnung für die potentiometrische Betriebsweise der aus den Fig. 2a und 3a entspricht. Die Arbeitselektrode AP dient hier allerdings nur für den potentiometrischen Betriebsfall. Für die amperometrische Messung ist im Gehäuse 25, das hier gleichzeitig als Gegenelektrode G dient, eine Arbeitselektrode AA vorgesehen, beispielsweise aus Gold.

Die Umschaltung zwischen einzelnen Betriebsweisen kann nun zeitabhängig erfolgen, beispielsweise kann der Sensor 1 grundsätzlich amperometrisch betrieben werden, wobei in größeren Zeitabständen, z.B. täglich einmal für eine relativ kurze Zeit von einigen Minuten ein potentiometrischer Betrieb dazwischen geschoben wird. Das potentiometrische Meßsignal dient dann lediglich zur Kontrolle der ordnungsgemäßen Funktion der amperometrischen Sonde. Man erhält auf diese Weise eine interne Plausibilitätskontrolle der amperometrischen Meßwerte.

Umgekehrt kann man auch das potentiometrische Meßverfahren einsetzen, um damit beispielsweise die Grundlastdosierung einer Chemikalienpumpe zu steuern. Nur in gewissen größeren Zeitabständen, die durchaus einige Stunden betragen können, kann dann mit Hilfe des amperometrischen Betriebes eine Feinkorrektur oder auch eine Plausibilitätskontrolle erfolgen. Die Umschaltung zwischen beiden Betriebsweisen kann dabei durch eine entsprechende Zeitsteuerung, eine Programmsteuerung, die im Programmspeicher 12 abgelegt ist, oder auch abhängig von dem Meßsignal des Hilfssensors 13 erfolgen. Beispielsweise kann eine derartige Umschaltung immer eine vorbestimmte Zeit nach dem Wechsel eines Vorratsbehälters einer bestimmten Chemikalie erfolgen.

Sehr häufig sind amperometrische Meßsignale pH-abhängig, d.h. der gemessene Strom muß in Abhängigkeit vom unabhängig gemessenen pH-Wert korrigiert werden. In diesem Fall ist es mit dem vorliegenden Sensor 1 möglich, das Referenzsystem RpH der ohnehin notwendigen pH-Elektrode 19 gleichzeitig oder alternierend auch als Referenzelektrode RA der amperometrischen 3-Elektroden-Schaltung zu verwenden. Hierbei ist es vorteilhaft, eine pH-Elektrode mit großem AgCl-Vorrat zu verwenden, wie er z.B in den bekannten PHEX-Elektroden vorliegt.

Zum leichteren Verständnis werden im folgenden zwei Beispiele geschildert:
**Beispiel 1** Einsatz einer PHEX-Elektrode zur potentiometrischen PH-Messung und gleichzeitige Verwendung des Referenzsystems der PHEX als Referenzelektrode in einer amperometrischen 3-Elektroden-Anordnung.

Gemessen werden soll die H₂O₂-Konzentration in einem wäßrigen Medium. Das Meßwasser enthält oft eine gewisse Salzfracht, die im Versuch durch eine 0,1 molare Natriumsulfatlösung simuliert werden soll.

Die H₂O₂-Konzentration wird durch eine amperometrische 3-Elektroden-Anordnung bestimmt. Das amperometrische Meßprinzip zur H₂O₂-Bestimmung wird z.B. in der Meßzelle EP 41 der Fa. biometra angewandt und kann daher als bekannt vorausgesetzt werden. Im Unterschied zur biometra-Zelle kann jedoch auf die komplizierte Bauweise (Dünnschichtzelle) verzichtet und eine offene Konstruktion des Meßgefäßes angewandt werden. Im Experiment kann z.B. ein Becherglas als Behälter für das Meßwasser eingesetzt werden, in das die drei Elektroden eintauchen.

Zur pH-Korrektur des amperometrischen Meßsignals soll eine PHEX (z.B. PHEX 212 der Fa. Ingold) eingesetzt werden.

Ansetzen der Meßlösungen: Es werden 14,204 g Natriumsulfat (Merck 822286) in 1 L dest. Wasser gelöst. Die gewünschten pH-Werte der Lösungen werden in bekannter Weise durch Zugabe von Natronlauge- bzw. Schwefelsäurelösungen eingestellt.

Die gewünschte H₂O₂-Konzentration wird durch Zugabe von 30 %-iger Perhydrol-Lösung (Merck 7209) nach dem Aufstockungsprinzip voreingestellt. Die genaue H₂O₂-Konzentration wird in bekannter Weise durch Titration mit 0,1 normaler Kaliumpermanganatlösung (Merck 9935) ermittelt.

Meßsonden: Zur pH-Messung wird eine PHEX eingesetzt. die pH-Messung erfolgt in bekannter Weise mit Hilfe eines pH-Meßgeräts (Schott Modell CG817).

Zur amperometrischen H₂O₂-Bestimmung in 3-Elektroden-Anordnung werden eine Platin-Arbeitselektrode und eine Edelstahl-Gegenelektrode (Edelstahl 1.4571) angewandt. Als Referenzelektrode dient das Referenzsystem der PHEX. Dazu werden mit dem entsprechenden Kontakt der PHEX zwei Meßleitungen verbunden: Eine dient, wie oben beschrieben, zur PH-Messung mittels des pH-Meßgeräts und die zweite Meßleitung wird mit dem Referenzelektrodeneingang einer üblichen amperometrischen 3-Elektroden-Schaltung verbunden.

Im vorliegenden Beispiel kann also das Referenzsystem der PHEX gleichzeitig ohne gegenseitige Beeinflussung sowohl zur potentiometrischen pH-Messung, als auch zur amperometrischen H₂O₂-Bestimmung eingesetzt werden. Man erspart sich in der amperometrischen 3-Elektroden-Schaltung den Einsatz einer separaten Referenzelektrode.

Beide Meßwerte (pH-Wert und H₂O₂-Signal) können in einem angeschlossenen Meß- und Auswertegerät gespeichert werden und nach software-mäßig realisierter automatischer Korrektur des H₂O₂-Signals hinsichtlich der pH-Abhängigkeit z.B. auf einem Display zur Anzeige gebracht werden.

**Beispiel 2** Einsatz einer Redoxelektrode zur potentiometrischen Redoxmessung und alternierende Anwendung der Redoxelektrode als amperometrische 2-Elektroden-Meßzelle.

Es soll wie im Beispiel 1 der H₂O₂-Gehalt einer wäßrigen Lösung bestimmt werden. Es werden die gleichen Lösungen wie in Beispiel 1 verwendet. Man macht sich im folgenden den Umstand zunutze, daß die zu detektierende Substanz H₂O₂ sowohl potentiometrisch, als auch amperometrisch nachgewiesen werden kann. Hinsichtlich der Selektivität der Messung müssen jedoch bei einer Bestimmung durch Redoxmessung bestimmte Einschränkungen in Kauf genommen werden.

Im Unterschied zu Beispiel 1 wird im Beispiel 2 nicht nur ein Teil der potentiometrischen Meßsonde, nämlich das Referenzsystem, doppelt verwendet, sondern die gesamte Redoxsonde, bestehend aus Arbeits- und Referenzelektrode, dient im Falle des amperometrischen Betriebes als komplette amperometrische 2-Elektroden-Meßzelle. Dabei wird die potentiometrische Arbeitselektrode zur amperometrischen Arbeitselektrode und die potentiometrische Referenzelektrode zur amperometrischen Gegenelektrode.

Meßsonde: Verwendet wird eine RHEX (z.B. Ingold Pt4805-DXK-S8).

Zu Beginn der Messung wird zeitgesteuert ca 60 s lang das Redoxpotential der Meßlösung gemessen und in einem internen Speicher eines angeschlossenen Meß- und Steuergeräts mit einer vorher aufgenommenen Eichkurve (Abhängigkeit des Redoxpotentials der Lösung von der H₂O₂-Konzentration) verglichen. Dadurch erhält man, insbesondere bei Abwesenheit anderer Redoxspezies, einen guten Schätzwert für den H₂O₂-Gehalt der Lösung.

Nach Beendigung der Redoxmessung wird mittels des genannten Meß- und Steuergeräts die Redoxelektrode auf amperometrischen Betrieb umgeschaltet, d.h. es wird mittels einer üblichen potentiostatischen Schaltung, die sich ebenfalls im Steuergerät befinden kann, zwischen der Arbeits- und Gegenelektrode ein konstantes oder variables Potential angelegt und der zwischen den beiden Elektroden fließende Strom gemessen. Dieser Stromwert wird im Steuergerät mit einer vorher aufgenommen Wertetabelle (Zusammenhang Strom - H₂O₂-Konzentration) verglichen.

Das konstante Meßpotential oder der variable Meßbereich wurden vor Aufnahme der Eichwerte experimentell ermittelt oder der Literatur, z.B. den Angaben des o.g. Herstellers amperometrischer Meßzellen für die H₂O₂-Bestimmung (biometra), entnommen. Durch automatischen internen Vergleich der potentiometrisch und amperometrisch ermittelten H₂O₂-Gehalte in dem angeschlossenen Steuergerät kann eine Selbstkontrolle der beiden Meßverfahren erfolgen und dadurch die Zuverlässigkeit der Aussage erhöht werden.

## Patentansprüche

1. Elektrochemischer Sensor mit einer Elektrodenanordnung und einer Zentraleinheit, die mit der Elektrodenanordnung elektrisch verbunden ist und von der Elektrodenanordnung gelieferte Signale auswertet, dadurch gekennzeichnet, daß die Zentraleinheit (2) erste Mittel (6) zum Durchführen einer potentiometrischen Messung und zweite Mittel (7) zum Durchführen einer amperometrischen Messung und eine Schalteinrichtung (9) aufweist, die die Elektrodenanordnung (3) zwischen den ersten und den zweiten Mitteln (6, 7) umschaltet.

2. Sensor nach Anspruch 1, dadurch gekennzeichnet, daß die Elektrodenanordnung (3) eine für die potentiometrische und für die amperometrische Messung gemeinsame Referenzelektrode (R) aufweist.

3. Sensor nach Anspruch 1 oder 2, dadurch gekennzeichnet, daß die Elektrodenanordnung (3) eine Gegenelektrode (GA) aufweist, die zumindest nach dem Umschalten der Schalteinrichtung (9) von den ersten auf die zweite Mittel (6, 7) mit den zweiten Mitteln (7) verbunden ist.

4. Sensor nach Anspruch 3, dadurch gekennzeichnet, daß die Gegenelektrode als Referenzelektrode (R + G) ausgebildet ist.

5. Sensor nach Anspruch 3, dadurch gekennzeichnet, daß die Referenzelektrode (R) in einem ersten Bauteil (21) gebildet ist und die Gegenelektrode in einem davon räumlich getrennten zweiten Bauteil (25) ausgebildet ist, wobei beide Bauteile (24, 25) in dasselbe Fluid (5) eingetaucht sind.

6. Sensor nach Anspruch 5, dadurch gekennzeichnet, daß das erste Bauteil (21) eine erste Arbeitselektrode (AP) und das zweite Bauteil (25) eine zweite Arbeitselektrode (AA) aufweist, wobei vor dem Umschalten der Schalteinrichtung (9) von den ersten (6) auf die zweiten Mitteln (7) die erste Arbeitselektrode (AP) mit den ersten Mitteln (6) und nach dem Umschalten die zweite Arbeitselektrode (AA) mit den zweiten Mitteln (7) verbunden sind.

7. Sensor nach Anspruch 6, dadurch gekennzeichnet, daß die Schalteinrichtung (9) beim Umschalten von den ersten (6) auf die zweiten Mittel (7) die Verbindung von der ersten Arbeitselektrode (AP) zu den ersten Mitteln (6) unterbricht und eine Verbindung von der zweiten Arbeitselektrode (AA) zu den zweiten Mitteln (7) herstellt und umgekehrt.

8. Sensor nach einem der Ansprüche 1 bis 7, dadurch gekennzeichnet, daß die ersten und die zweiten Mittel (6, 7) gemeinsame mechanische und/oder elektrische Bauelemente (8) aufweisen.

9. Sensor nach einem der Ansprüche 1 bis 8, dadurch gekennzeichnet, daß die Zentraleinheit (2) eine Steuereinrichtung (10) aufweist, die die Schalteinrichtung (9) nach einem vorbestimmten Muster oder in Abhängigkeit von einem externen Signal (13, 11) betätigt.

10. Sensor nach Anspruch 9, dadurch gekennzeichnet, daß ein Hilfssensor (13) vorgesehen ist, dessen Ausgangssignal das externe Signal bildet.

11. Sensor nach einem der Ansprüche 1 bis 10, dadurch gekennzeichnet, daß zusätzlich zur Elektrodenanordnung (3) eine pH-Elektrode (19) mit einem Referenzsystem (RpH) vorgesehen ist, wobei das Referenzsystem (RpH) gleichzeitig oder über die Schalteinrichtung (9) alternierend mit den zweiten Mitteln (7) verbunden ist und als Referenzelektrode der Elektrodenanordnung bei einer amperometrischen 3-Elektroden-Schaltung oder als Gegenelektrode der Elektrodenanordnung bei einer amperometrischen 2-Elektroden-Schaltung dient.

12. Sensor nach Anspruch 11, dadurch gekennzeichnet, daß die pH-Elektrode einen großen Silberchlorid-Vorrat aufweist.

13. Verfahren zum Betreiben des Sensors nach einem der Ansprüche 1 bis 12, dadurch gekennzeichnet, daß periodisch von der potentiometrischen Messung auf die amperometrische Messung und zurück geschaltet wird.

14. Verfahren nach Anspruch 13, dadurch gekennzeichnet, daß die potentiometrische und die amperometrische Messung in Zeitabschnitten unterschiedlicher Länge durchgeführt wird.

15. Verfahren nach Anspruch 14, dadurch gekennzeichnet, daß die amperometrische Messung zur Feinkorrektur der potentiometrischen Messung verwendet wird.
